Europäisches Patentamt

European Patent Office

Office européen des brevets

(11) Publication number: **0 093 124**
**B1**

(12) **EUROPEAN PATENT SPECIFICATION**

(45) Date of publication of patent specification: **06.08.86**

(21) Application number: **82903230.9**

(22) Date of filing: **10.11.82**

(86) International application number:
**PCT/AU82/00183**

(87) International publication number:
**WO 83/01728 26.05.83 Gazette 83/13**

(51) Int. Cl.⁴: **A 23 D 5/02, A 23 D 3/02, A 23 C 15/02, A 23 C 15/04**

(54) METHOD OF PRODUCING A FOOD PRODUCT AND FOOD PRODUCT PRODUCED THEREBY.

(30) Priority: **11.11.81 AU 1515/81**

(43) Date of publication of application:
**09.11.83 Bulletin 83/45**

(45) Publication of the grant of the patent:
**06.08.86 Bulletin 86/32**

(84) Designated Contracting States:
**AT BE CH DE FR GB LI NL SE**

(56) References cited:
**AU-B- 516 255**
**AU-D-1 616 276**
**AU-D-1 934 676**
**CA-A-1 074 176**
**US-A-3 922 376**
**US-A-3 946 122**
**US-A-4 000 322**

(73) Proprietor: **ALPEN DAIRY FOODS PTY. LIMITED**
**60 Jolimont Street**
**East Melbourne Victoria 3002 (AU)**

(72) Inventor: **KILROY, Stanley Alan Robert**
**439-441 Mitcham Road**
**Mitcham, VIC 3132 (AU)**

(74) Representative: **Harrison, Michael Robert et al**
**URQUHART-DYKES & LORD 5th Floor Tower**
**House Merrion Way**
**Leeds LS2 8PA West Yorkshire (GB)**

Courier Press, Leamington Spa, England.

## Description

The present invention relates to food products including edible fats and is particularly but not exclusively concerned with spreadable products such as butter and margarine. More particularly the invention is concerned with preparing a premix comprising casein and/or a casein derivative, an aqueous carrier and, for example, a phosphate or citrate salt and mixing an edible fat with the premix.

Dairy butter is a common food product in many parts of the world and is made by a traditional process which varies only slightly from country to country. Basically, the process involves agitation of cream derived from milk to cause separation of the milk fat from milk serum and milk solids of a non fat nature. At the separation stage, globules of milk fat agglomerate to form a solid mass which includes reduced moisture — e.g. approximately 16% — and only a small proportion of solids of a non fat nature. The residual constituents of the original body of cream are drained as butter milk.

The solid body of butter may be subjected to further processing or working after separation and certain additives such as salt may be introduced. The resulting product may be stored under refrigeration.

A common use of the resulting product is as a spread, but its characteristics are such that it is not well suited for that use. As indicated above, it is usual to store dairy butter under refrigerated conditions, but it firms and hardens at a temperature below 15°C and has such a low coefficient of heat transfer as to be slow to soften at higher ambient temperatures encountered upon removal from a refrigerator. Deliberate heating creates other problems due to separation of the constituents and an unattractive oily appearance, and for these and other reasons dairy products can be difficult to handle at temperatures above approximately 30°C.

As a result, there has been a long standing need for dairy butter to have better spreading characteristics at refrigeration temperatures.

It has been observed that natural cheese such as cheddar, containing 50% or more milk fat, when comminuted and emulsified with phosphates, citrates or similar salts and heated under agitation to produce so called "processed cheese" (a commonly manufactured product), can be induced to retain a soft spreadable consistency even when maintained at refrigeration temperatures after manufacture. It has been found that this phenomenon is related to the condition of the casein in the cheese to be processed, and the effect of the emulsifying salts on the casein to produce chains of peptised casein molecules resulting in what is referred to as a short body structure.

The manufacturing procedure for the "processed cheese" includes a heating stage, and it has been found to be not possible to process natural dairy butter in the same manner as cheese since the admixture of emulsifying salts with the butter prior to heating results in separation of the components as the fat component inhibits the action of the emulsifier on the casein. Other pre-blended fats such as vegetable fats or oils with casein and other components are equally resistant to processing in a similar manner.

Australian Patent 516255 discloses a process for preparing a processed cheese product in which a high percentage of rennet casein is admixed with water and solvating agents, as well as optionally a fatty or oily substance, prior to being agitated and heated. It is proposed to vary the amount of solvating agent to adjust the smoothness of the product but the level of solvating agent proposed is relatively low. While it is not clearly understood by the present applicant how the process of this patent works, it is believed that the use of substantial amounts of previously dry, edible rennet casein which is hydrated with large quantities of water may alleviate the subsequent separation of the components.

Australian Patent No. 502963 discloses one process for producing a food product in which a mixture including water, casein/caseinate and sodium citrate is prepared at 70°C and mixed with medium containing fats. In this case it appears that the sodium citrate is added merely as a food-grade salt or as a viscosity adjusting agent, and that the temperature at which the mixture and medium containing fats are mixed is critical since partially crystallised and partially molten fats must be avoided.

Australian Patent No. 503127 discloses another such process in which a dispersed proteinaceous aqueous phase is mixed with a continuous plastic fatty phase. The aqueous phase contains phosphatides, proteinaceous ingredients preferably including sodium caseinate and dispersed triglyceride fats which are mixed together at 65°C. As with Australian Patent No. 502963, in the process of Australian Patent No. 503127 the viscosity of the aqueous phase is important and phosphates, citrates or other thickening agents may be added to adjust the viscosity.

In US Patent No. 3922376 an aqueous phase comprising sour buttermilk is prepared at 38°C to 50°C and buffering and flavouring salts including common table salt and alkali metal citrates and phosphates are added, following which pH and water content adjustment is made as necessary. The aqueous phase and a fat phase are emulsified by vigorous stirring also at a temperature of 38°C to 50°C following which the emulsion is flash pasteurized and cooled. The citrates and phosphates are said to bind the calcium in the protein to give the proteins better water binding ability, as well as stabilizing the pH and providing the buffer effect.

US Patent No. 3946122 discloses the preparation of an aqueous composition in the blending of a margarine which is in effect a means of producing caseinate by the precipitation of reconstituted skim milk solids using sodium citrate solution in conjunction with citric acid solution. There is no heating of the aqueous phase prior to mixing with a fatty phase other than preferred heating to a temperature at which the fat is molten.

US Patent 3946122 proposes obtaining a satisfactory food product which is an oil in water emulsion while Australian Patents Nos. 502963 and 503127 and US Patent No. 3922376 propose the use of margarine technology to produce a food product, which requires the achievement of a satisfactory emulsification of water in oil and the achievement of satisfactory plasticity properties. However, the commercial success of margarine type products has been found often to be dependent on their similarity in texture to butter while being spreadable at room temperature, so that a relatively short-chain structure is required.

In spite of extensive investigation into the production of a spreadable refrigerated butter, no such commercial process is known, and it is an object of the present invention to provide a method of producing a spreadable refrigerated food product in which the fat is butter, butter fat or vegetable oil, but no matter which fat is used, which generally resembles butter in texture on thawing.

According to the present invention this is achieved by providing the salts as an effective amount of peptising agent to fully peptise the casein and/or casein derivative, agitating and heating the premix to a temperature of at least 80°C for a time sufficient to complete the action of the peptising agent on the casein and/or casein derivative to provide a sol, homogeneously mixing the sol with the edible fat to provide a mixture and cooling the mixture to a temperature below 5°C sufficient to freeze the mixture and to crystallise the fat within the mixture.

Thus, in contrast to the aforementioned patents, the present invention requires the preparation of a casein sol in which all of the casein has been peptised by a peptising agent such as phosphates and citrates, and the subsequent addition of the fat together with the cooling of the product to shorten the chain structure of the product.

Preferably the premix is heated to a temperature in the range of 80°C to 110°C in order to pasteurize or even sterilize the ingredients by, for example, direct injection of culinary steam. Such steam may be injected direct into a premixing vessel, and the premix may be recirculated out of and back through the vessel by suitable pump means to ensure through dispersion and the casein or casein derivative is conveniently added during such recirculation. The edible fat content may be added exteriorly of the vessel, through, for example, the pump means, or directly into the vessel.

The premix may be stored prior to mixing with the edible fat in which case, it may be reheated to a temperature of at least 80°C on mixing with the edible fat. Preferably, however, the edible fat is thoroughly mixed with the prepared premix immediately after preparation so that said mixing may commence at an elevated temperature, for example of at least 80°C.

The edible fat may be natural dairy butter churned from either sweet cream or cultured cream, with or without the addition of salt as NaCl in the final product, and having an approximate analysis of 80% butter fat, 2% curd, 2% salt (as NaCl) and 16% moisture. However, butter fat suitably recombined with dairy solids and/or stabilizers known as "reconstituted butter", may be utilized in the same manner as natural dairy butter, as may butter oil or vegetable oil alone. The preferred edible fat is natural dairy butter or reconstituted butter, but the food product produced by the method of the invention described heretofore using butter is unstable as is described hereinafter.

The casein component may be casein curd either lactic or acid, precipitated from wholesome skimmed milk or the casein derivatives of such casein, (for example sodium, calcium or potassium) prepared as a food in a hygienic manner. Alternatively, milk powders such as skim milk, butter milk, etc. comprising sufficient casein may be substituted or used as an admixture. The casein or casein derivative may be added in any mixture of the aforementioned products. The preferred component is sodium caseinate.

The casein peptising salts such as phosphates or citrates, may be used separately or blended in a suitable proportion and be selected from the salts of citric acid (citrates) and the salts of polyphosphoric acid (polyphosphates) or monophosphoric acid (monophosphates) or such other agent as will function in a similar manner to peptise the casein molecules, resulting in formation of a finely divided colloidal solution or sol in water or other liquid carrier and also enable the acidity of the compound to be adjusted by their selection. The preferred salt varies in accordance with the acidity etc. of the other components but is substantially a phosphate mixed with a proportion of citrates. The advantage of producing a casein sol in this way is that it is then readily miscible with the edible fat.

The liquid carrier may be clean potable water and/or milk or its by-product such as skimmed milk, and/or butter milk and/or whey. Such milk products may be incorporated in their natural state or recombined from dry powder. The preferred liquid carrier is butter milk either freshly produced or recombined from powder containing approximately 6% solids.

The product formed by the combination of the premix and edible fat and subsequent chilling may be somewhat lacking in texture, mouth feel, colour and taste and, in the case of whole butter being used as the fat, is also unstable over an extended period. Nevertheless, the product may have several valuable applications in this condition including its ability to be readily combined with other food products as a baking additive etc. or as a fat compound readily sprayed onto an edible substrate or spray dried. It is however capable of ongoing processing in several modes to render it a butter-like gel most suitable for spreading.

Where the edible fat comprises vegetable oil or butter fat, which has enhanced keeping qualities over natural dairy or reconstituted butter while having a natural butter flavour and colour and also is of a reduced volume allowing for more economical transport, the product of the fat and premix may be packaged hot under a hermetic seal and is stable for long periods. Such packaged product is refrigerated and reduced to freezing and fat crystallisation temperature prior to storage at 5°C. Preferably the mixture is cooled to approximately −4°C. While this mixture may provide an alternative food it will have a texture and colour somewhat different from the process incorporating natural dairy butter. The product formed in accordance with the present invention from vegetable oil or from butter fat is readily spreadable at refrigeration temperatures of 0°C to 5°C and may be used as a spread whether alone or mixed with other food products. However, in order to bring out further qualities, including the texture of a full butter product, the mixture may be treated following recrystallisation of the fat by rewarming to approximately 20°C. The product may then be stored at 5°C. Rewarming to approximately 20°C has been found to allow the fat to disperse in the mixture.

When the mixture of premix and butter derived in accordance with the invention is cooled to freezing and to crystallise the fat, preferably at a temperature of approximately −4°C, the product, on warming to 5°C, has a soft spreadable consistency but is unstable on being raised in temperature above 5°C due to the presence of the casein in the butter and moisture will separate. However, in accordance with a further aspect of the invention it may be stabilised by adding further effective amounts of peptising agent and homogeneously mixing and heating the further mixture to a temperature of at least 80°C to obtain a further sol in which all of the casein molecules have been peptised, cooling the further mixture to recrystallise the fat and obtain a gel, warming the gel to a temperature sufficient to allow redistribution of the crystallised fat in the further mixture and storing the resultant food product at a temperature up to about 5°C.

More generally the mixture including butter may be heated indirectly to a temperature of approximately 5°C to enable the convenient addition and combination of the further fraction of peptising agent of the same or similar nature to those added to the premix. The further mixture is then subjected to heating in order to peptise the curd fraction of the butter added to the premix and under continued agitation is heated to at least 80°C. Additional moisture in the form of clean potable water may be added during this stage, particularly as a vehicle to convey the peptising agent and aid its rapid dispersion.

The further sol thus produced is preferably packaged, after being homogeneously mixed for the required period, into hermetically sealed containers to utilize the heat and sol characteristics to facilitate the packaging and partial vacuum so formed on the cooling of the further sol.

The further sol is preferably subsequently cooled by air, followed by refrigerating advantageously to approximately −4°C, to crystallise the fat and obtained gel.

After refrigerating it may be found that the colour, texture and mouth feel of the gel may not equal butter of a similar consistency. Thus, the packaged product may be subjected to a further process by allowing the packaged product to be elevated in temperature gradually to approximately 20°C allowing the fat to disperse slightly and reappear in a manner similar to butter and assume largely the attributes of colour, mouth feel, lustre and texture of butter of a similar consistency. The product may then be stored for long periods at temperatures up to 5°C and will be spreadable from the refrigerator.

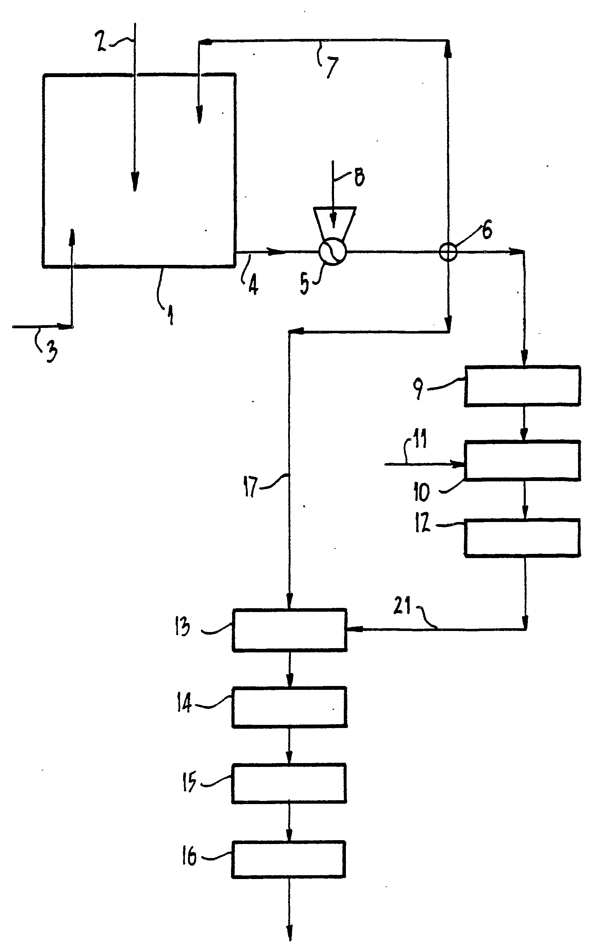

One embodiment of a method in accordance with the present invention will now be described by way of example only with reference to the accompanying drawing which illustrates essentially in block manner the process stages.

The process of the present invention will be described with reference to the drawing in the manufacture of a spreadable refrigerated butter. A premix is prepared in the vessel 1 by adding at 2 a liquid carrier such as water or butter milk, together with phosphate and/or citrate peptising salts and blending by mechanical agitation in vessel 1 and recirculation through conduit 4 and by pump 5 via valve 6 and conduit 7. During the recirculation stage other ingredients including casein or caseinate and other powdered additives are introduced at 8 and the process of combining continued while culinary steam is injected at 3. The agitation and heating are carried out to a temperature and for a time sufficient to complete the action of the peptising salts in finely dividing and peptising the casein and/or casein derivative. One advantage of the peptising being carried out at a temperature of at least 80°C is that the premix is pasteurized or, if the temperature is sufficiently high, sterilized.

On completion of the premixing stage, natural dairy butter is introduced directly into the vessel 1 or at 8 into pump 5 to be combined with the hot premix. The butter is preferably added at approximately 5°C to cool the premix sol during the combining process and the butter and premix is mechanically blended to a homogeneous mixture. The mixture of butter and premix is directed via valve 6 into a collar 9 where the product is cooled to approximately −4°C or to such temperature at which the fat crystallises.

The product so prepared may be discharged from the process and may be used for mixing with other products, spraying onto an edible substrate or to be spray dried. However, this mixture is unstable and to counter this the mixture is directed from cooler 9 to chamber 10 where following rewarming to about 5°C it is combined with a further quantity of peptising agent added at 11 and the mixture so formed is heated at 12 to at least 80°C or above to peptise the curd fraction of the butter previously added to the premix. The components are homogeneously combined and mixed for a period to ensure complete peptisation of all casein molecules.

The heated product may now be packaged following path 21 and hermetically sealed at 13 and again cooled at 14 to −4°C or to such alternative temperature at which the fat crystallises sufficiently. It may be found, however, that the product does not have the colour, texture and mouth feel of natural butter of a similar consistency, and this may be produced to a considerable degree by allowing at 15 the packaged product to rise in temperature to approximately 20°C or such temperature at which the crystallised butter fat disperses sufficiently to assume the color and texture in natural butter while being spreadable direct from the refrigerator.

The packaged product is finally stored at 0 to 5°C and will remain stable for an extended period.

If butter fat or vegetable oil is used as the edible fat, the mixture has been found to be stable since no further casein is added and it is not necessary for the stabilization steps 9 to 12 to be carried out so that the hot product is transferred direct from the valve 6 to be packaged at 13 as shown by the path 17, and then treated as per the steps 14 to 16 to provide a product having a butter-like texture which is spreadable at refrigeration temperatures.

In practice in producing a spreadable butter like product, 1 kg of sodium caseinate and 180 g of a mixture of citrate and phosphate peptising salts together with 4½ kg of butter milk are added to the vessel 1 and are thoroughly blended and injected with culinary steam to 95°C. This premix is agitated and may be recirculated for approximately 10 minutes to ensure the thorough peptisation of the casein component and dispersion in the sol so formed. 8 kg of natural dairy butter at a temperature of approximately 5°C is added to the hot premix. The premix and butter are homogeneously combined by agitation and may be recirculated through the vessel 1. Steam is no longer introduced into the vessel when the butter is added and the product is cooled by the addition of the butter. The product is discharged through valve 6 and is further cooled either in a batch or preferably continuously in a swept surface heat exchanger 9 to a temperature of approximately −4°C. The cooled emulsion is then pumped or otherwise conveyed to a mixing chamber 10 where it is slightly heated and a further 180 g of similar peptising salts is thoroughly mixed and dispersed throughout the mixture.

The mixture is then pumped or otherwise conveyed to a separate heat exchanger 12 where it is heated by indirect heat to pasteurize or sterilize the butter component above 80°C and homogeneously mixed to produce a further sol. The product is then packaged hot at 13 and hermetically sealed into containers. The packaged product is then cooled at 14 to −4°C and is subjected at 15 to the heat treatment elevating the temperature to 20°C. Finally at 16 the product is stored at 0 to 5°C.

The foods produced in accordance with the foregoing processes may have their flavours enhanced or modified by the addition of suitable additives during any of the stages of manufacture but preferably during the secondary heating phase 10 to 12.

## Claims

1. A method of producing a food product which comprises preparing a premix comprising casein and/or a casein derivative, an aqueous carrier and salts and mixing an edible fat with the premix, characterised in that the salts comprise an effective amount of peptising agent to fully peptise the casein and/or casein derivative and the premix is agitated and heated to a temperature of at least 80°C for a time sufficient to complete the action of the peptising agent on the casein and/or casein derivative to provide a sol, and in that an edible fat is homogeneously mixed with the sol to obtain a mixture and the mixture is cooled to a temperature below 5°C sufficient to freeze the mixture and to crystallise the fat within the mixture.

2. A method as claimed in claim 1 characterised in that the edible fat is added at a temperature of approximately 5°C to the hot premix.

3. A method as claimed in claim 1 or claim 2 characterised in that the mixture is cooled to a temperature of approximately −4°C.

4. A method as claimed in any one of claims 1 to 3, characterised in that the peptising agent comprises phosphate and/or citrate salts.

5. A method as claimed in any one of the preceding claims, characterised in that the casein comprised in the premix is one or more of the materials selected from the group consisting of fresh milk product, powdered milk product, sodium caseinate, calcium caseinate and potassium caseinate.

6. A method as claimed in any one of the preceding claims, characterised in that the aqueous carrier is one or more of the materials selected from the group consisting of water, butter milk, skim milk, and other liquid flavour enhancing components.

7. A method as claimed in any one of the preceding claims characterised in that subsequent to freezing of the mixture and crystallisation of the fat, the mixture is rewarmed to approximately 20°C to disperse the fat in the product.

8. A method as claimed in any one of claims 1 to 6 characterised in that the edible fat comprises whole dairy butter or reconstituted butter.

9. A method as claimed in claim 8 characterised in that the mixture is stabilized by adding further effective amounts of peptising agent and homogeneously mixing and heating the further mixture to a temperature of at least 80°C to obtain a further sol in which all of the added casein molecules have been peptised, cooling the further mixture to recrystallise the fat and obtain a gel, warming the gel to a temperature sufficient to allow redistribution of the crystallised fat in the further mixture and storing the resultant food product at a temperature up to about 5°C.

10. A method as claimed in claim 9 characterised in that the further mixture is cooled to a temperature of approximately −4°C.

11. A method as claimed in claim 9 or claim 10 characterised in that the food product is packaged between the steps of heating the further mixture and cooling the further mixture.

12. A method as claimed in any one of the preceding claims characterised in that the casein or casein derivative is added to the premix as sodium caseinate and the peptising agent is added to the premix as a mixture of citrate and phosphate salts and the ratio of said sodium caseinate and peptising salts is 1 : 0.18.

13. A method as claimed in claim 9 or any claim dependent therefrom characterised in that 8 units of natural dairy butter are mixed with the premix and the casein content of the natural dairy butter is peptised by the addition to the mixture of 0.18 units of further peptising agent in the form of a mixture of citrate and phosphate salts.

**Patentansprüche**

1. Ein Verfahren zur Herstellung eines Nahrungsmittelproduktes, das die Herstellung einer Vormischung, enthaltend Kasein und/oder ein Kaseinderivat, einen wässerigen Träger und Salze, und das Mischen eines verzehrbaren Fettes mit der Vormischung umfaßt, dadurch gekennzeichnet, daß die Salze eine wirksame Menge eines Peptisierungsmittels enthalten, um das Kasein und/oder Kaseinderivat völlig zu peptisieren und daß die Vormischung gerührt wird und auf eine Temperatur von wenigstens 80°C für eine Zeitspanne erwärmt wird, die hinreicht, um die Wirkung des Peptisierungsmittels auf das Kasein und/oder Kaseinderivat zu vervollständigen, um ein Sol zu bilden, und daß ein verzehrbares Fett homogen mit dem Sol vermischt wird, um eine Mischung zu erhalten und die Mischung wird auf eine Temperatur unter 5°C abgekühlt, die hinreicht, um die Mischung zu frieren und um das Fett in der Mischung zu kristallisieren.

2. Ein Verfahren nach Anspruch 1, dadurch gekennzeichnet, daß das Verzehrbare Fett der heißen Vormischung bei einer Temperatur von etwa 5°C zugegeben wird.

3. Ein Verfahren nach Anspruch 1 oder Anspruch 2, dadurch gekennzeichnet, daß die Mischung auf eine Temperatur von etwa −4°C gekühlt wird.

4. Ein Verfahren nach einem der Ansprüche 1 bis 3, dadurch gekennzeichnet, daß das Peptisierungsmittel Phosphat- und/oder Zitratsalze enthält.

5. Ein Verfahren nach einem der vorhergehenden Ansprüche, dadurch gekennzeichnet, daß das in der Vormischung enthaltene Kasein einer oder mehrere der Stoffe, ausgewählt aus der Gruppe, bestehend aus frischem Milchprodukt, Pulvermilchprodukt, Natrium-kaseinat, Kalziumkaseinat und Kaliumkaseinat ist.

6. Ein Verfahren nach einem der vorhergehenden Ansprüche, dadurch gekennzeichnet, daß der wässerige Träger einer oder mehrere der Stoffe, ausgewählt aus der Gruppe, bestehend aus Wasser, Buttermilch, Magermilch und anderen flüssigen geschmacksverstärkenden Komponenten ist.

7. Ein Verfahren nach einem der vorhergehenden Ansprüche, dadurch gekennzeichnet, daß die Mischung nach dem Frieren der Mischung und dem Kristallisieren des Fettes auf etwa 20°C aufgewärmt wird, um das Fett im Produkt zu dispergieren.

8. Ein Verfahren nach einem der Ansprüche 1 bis 6, dadurch gekennzeichnet, daß das verzehrbare Fett Vollmilchbutter oder rekonstituierte Butter ist.

9. Ein Verfahren nach Anspruch 8, dadurch gekennzeichnet, daß die Mischung durch Zugabe weiterer, wirksamer Mengen von Peptisierungsmittel Homogenmischen und Erwärmen der weiteren Mischung auf ein Temperatur von wenigstens 80°C, um ein weiteres Sol zu erhalten, in dem alle der zugegebenen Kaseinmoleküle peptisiert worden sind, Abkühlen der weiteren Mischung, um das Fett wieder zu kristallisieren und ein Gel zu erhalten, Erwärmen des Gels auf eine Temperatur, die hinreicht, um die erneute Verteilung des kristallisierten Fettes in der weiteren Mischung zu erlauben, und Aufbewahren des so erhaltenen Nahrungsmittelproduktes bei einer Temperatur bis zu etwa 5°C stabilisiert wird.

10. Ein Verfahren nach Anspruch 9, dadurch gekennzeichnet, daß die weitere Mischung auf eine Temperatur von etwa −4°C gekühlt wird.

11. Ein Verfahren nach Anspruch 9 oder 10, dadurch gekennzeichnet, daß das Nahrungsmittelprodukt zwischen den Stufen des Erwärmens der weiteren Mischung und Abkühlen der weiteren Mischung verpackt wird.

12. Ein Verfahren nach einem der vorhergehenden Ansprüche, dadurch gekennzeichnet, daß das Kasein oder Kaseinderivat der Vormischung als Natriumkaseinat zugegeben wird und daß das Peptisierungsmittel der Vormischung als Mischung aus Zitrat und Phosphatsalzen zugegeben wird, wobei das Verhältnis von Natriumkaseinat und peptisierenden Salzen 1 : 0,18 ist.

13. Ein Verfahren nach Anspruch 9 oder einem davon abhängigen Anspruch, dadurch gekennzeichnet, daß mit der Vormischung acht Einheiten natürlicher Molkereibutter vermischt werden und der Kaseingehalt der natürlichen Molkereibutter durch die Zugabe von 0,18 Einheiten von weiterem Peptisierungsmittel in Form einer Mischung aus Zitrat- und Phosphatsalzen zur Mischung peptisiert wird.

**Revendications**

1. Procédé de fabrication d'un produit alimentaire consistant à préparer un pré-mélange contenant de la caséine et/ou dérivé de la caséine, un support aqueux, des sels et à mélanger de la graisse comestible au pré-mélange, caractérisé en ce que les sels renferment une quantité effective d'un agent facilitant la digestion, notamment la digestion complète de la caséine et/ou le dérivé de la caséine et en ce que le pré-mélange est agité chauffé à une température d'au moins 80°C pendant une période suffisante telle qu'elle permette à l'agent facilitant la digestion de compléter son action sur la caséine et/ou le dérivé de la caséine, afin de produire une solution colloïdale, une graisse comestible étant mélangée de manière, homogène à la solution colloïdale de sorte que l'on obtient un mélange, lequel est refroidi à une température inférieure à 5°C, telle qu'elle permette au mélange de se congeler et à la graisse de cristalliser dans le mélange.

2. Procédé suivant la revendication 1, caractérisé en ce que la graisse comestible est rajoutée au pré-mélange chaud à une température d'environ 5°C.

3. Procédé suivant les revendications 1 ou 2, caractérisé en ce que le mélange est refroidi à une température d'environ −4°C.

4. Procédé suivant l'une quelconque des revendications 1 à 3, caractérisé en ce que l'agent facilitant la digestion comprend du phosphate et/ou du citrate.

5. Procédé suivant l'une quelconque des revendications précédentes, caractérisé en ce que la caséine comprise dans le pré-mélange est au moins une substance choisie parmi le groupe se composant de lait frais de lait en poudre, de caséinate de sodium, de caséinate de potassium.

6. Procédé suivant l'une quelconque des revendications précédentes, caractérisé en ce que le support aqueux est au moins une substance choisie parmi le groupe se composant d'eau, de babeurre, de lait écrémé et d'autres composants enrichis d'un liquide aromatisé.

7. Procédé suivant l'une quelconque des revendications précédentes, caractérisé en ce qu'à la suite la congélation du mélange et de la cristallisation de la graisse, le mélange est réchauffé à environ 20°C en vue de disperser la graisse dans le produit.

8. Procédé suivant l'une quelconque des revendications 1 à 6, caractérisé en ce que la graisse comestible contient la totalité du beurre laitier ou du beurre reconstitué.

9. Procédé suivant la revendication 8, caractérisé en ce qu'il consiste à stabiliser le mélange en ajoutant des quantités effectives d'agent facilitant la digestion, en mélangeant de manière homogène et en chauffant le mélange à une température d'au moins 80°C de façon à obtenir une solution colloïdale dans laquelle toutes les molécules de caséine additionnées ont été assimilées en refroidissant le mélange obtenu en vue de recristalliser la graisse et d'obtenir un colloïde, en réchauffant ce dernier à une température suffisante telle qu'elle permette la redistribustion de la graisse cristallisée dans le mélange et en conservant le produit alimentaire obtenu à une température approximative d'au plus 5°C.

10. Procédé suivant la revendication 9, caractérisé en ce que le mélange obtenu est refroidi à une température d'environ −4°C.

11. Procédé suivant les revendications 9 ou 10, caractérisé en ce que le produit alimentaire est conditionné entre la phase consistant à chauffer le mélange et celle destinée à refroidir ledit mélange.

12. Procédé suivant l'une quelconques des revendications précédentes, caractérisé en ce que la caséine ou le dérivé de la caséine est additionée au pré-mélange sous la forme de caséine de sodium et l'agent facilitant la digestion est additionnée au pré-mélange sous la forme d'un mélange de citrate et de phosphate, le taux de ladite caséine de sodium et des sels facilitant la digestion étant de 1:0,18.

13. Procédé suivant la revendications 9 ou des revendication y relatives, caractérisé en ce que huit parts du beurre laitier naturel sont mélangées au pré-mélange et en ce que la quantité de caséine contenue dans le beurre latier naturel est assimilée par l'apport au mélange de 0,18 par d'agent facilitant la digestion se présentant sous la forme d'un mélange de citrate et de phosphate.